# EUROPEAN PATENT SPECIFICATION

(11) **EP 2 334 596 B1**
(45) Date of publication and mention of the grant of the patent: **04.07.2012**
(21) Application number: 09776306.4
(22) Date of filing: 19.08.2009
(51) Int. Cl.: C01B 25/37, B27K 3/26, A01N 59/00, C09K 21/04, C23F 11/18

(54) **FERRIC PHOSPHATE BASED COMPOSITION AND USE THEREOF**
AUF EISEN(III)-PHOSPHAT BASIERENDE ZUSAMMENSETZUNG UND VERWENDUNG DAVON
COMPOSITION À BASE DE PHOSPHATE FERRIQUE, PRÉPARATION ET APPLICATIONS ASSOCIÉES

(30) Priority: 22.08.2008 EE 200800055
(43) Date of publication of application: 22.06.2011
(73) Proprietor: Nikolajeva, Irina, 13522 Tallinn (EE)
(72) Inventor: NIKOLAEV, Gennadi, EE-13522 Tallinn (EE)
(74) Representative: Pikkor, Riho
(86) International application number: PCT/EE2009/000012
(87) International publication number: WO 2010/020256

(56) References cited:
- WO-A1-98/48987
- DE-A1- 1 809 192
- US-B1- 6 350 474

## Description

### Technical field

The invention deals with a phosphate based composition, which can be used for the bio- and fire protection of timber, as an antibacterial disinfectant, as well as a rust converter for the corrosion protection of metals.

### Technical level

A phosphorus compound and the use thereof are known (US patent 6350474 B1, A01N 59/00, David Dzneladze et al., 2002), whereas the composition of the phosphorus compound is:

| | |
|---|---|
| orthophosphoric acid | 100 mass fractions, |
| iron oxide | 20-41 mass fractions, |
| aluminium powder | 0.5-2.5 mass fractions, |
| water | 30-70 mass fractions. |

To obtain the compound, water and iron oxide and aluminium powder are mixed with orthophosphoric acid, whereby an exothermic reaction takes place. The heat released is sufficient to dissolve the iron oxide and aluminium powder.

The phosphoric compound obtained is absolutely harmless to nature. It can be used as an impregnating agent to increases the fire resistance of materials, as well as to increase the strength and heat resistance of concrete and ceramics, as a preservative, as a rust-inhibiting agent.

A disadvantage of the compound is its relatively low stability and low wetting capacity, which impede a broad use of the compound.

A phosphoric compound is also known (Utility model EE 00444 U1, A01N 59/26, Gennadi Nikolaev, 2004), which is distinguished by the fact that, in order to increase its stability and wetting capacity, amounts of orthophosphoric acid, iron oxide, aluminium powder and water with ratios known from US patent 6350474 R1 are mixed and 005-0.2 mass fractions of either ethyl alcohol or glycerine are added to the mixture.

When using the compound obtained as a surface preserving-coating material, a disadvantage is the low fire resistance of materials covered with the compounds, for example timber, paper, textile and metal surfaces, and inadequate protection against rotting and humidity.

Also utility model EE 00549 U1, C09D 5/18, Gennadi Nikolaev et al., 2005, is known, which deals with a surface preserving-coating material with the following composition:

| | |
|---|---|
| orthophosphoric acid | 60-80 mass fractions, |
| iron oxide | 50-60 mass fractions, |
| aluminium powder | 5-10 mass fractions, |
| water | 40-60 mass fractions, |
| ammonium nitrate | 7-10 mass fractions, |
| copper sulphate | 7-10 mass fractions, and |
| colouring Pigments | Fe₂O₃, TiO₂, MnO₂ |

Even though covering with a solution of a phosphoric compound like that increases the fire resistance of materials and decreases the risks of rotting and humidity, the fire and bio-protection of materials containing cellulose is inadequate and fails, for instance, to meet the requirements of fire resistance class B-s1-d0 of timber constructions, as determined by standards EN 13823:2002 and EN ISO 11925-2.

A known solution closer to this invention can be regarded the aforementioned patent US 6350474 B1 by David Dzneladze et al., which deals with an ferric phosphate based composition, which consists of orthophosphoric acid, iron(III)oxide, aluminium powder and water and which is obtained by mixing water, iron oxide and metallic aluminium with orthophosphoric acid.

### Subject matter of the invention

The task of this invention is to obtain an ferric phosphate based composition, the use of which increases substantially the fire resistance and bio-protection of materials containing cellulose.

The task set is solved in such a manner that in the ferric phosphate based composition, to obtain which 100 mass fractions of orthophosphoric acid is mixed with water, iron oxide and an aluminium source, using powdery Al₂O₃ in the amount of 5-10 mass fractions as the aluminium source, thereby maintaining the reaction temperature within a range of 60-70 °C. Due to an exothermic reaction no additional energy source is necessary to dissolve the components. The amount of the iron oxide constitutes 10-20 mass fractions and the amount of the water 100 mass fractions, whereby the composition is distinguished by the fact that at least one nanopowder from among silver, copper or flint in the amount of 0.5 mass fractions is added to the mixture. Due to the proportions of the components according to the invention, the relative percentage of the aluminium oxide increases, which improves the properties or the final concentrate substantially, as a result of which the fire and bio-resistance of materials containing cellulose covered with the said composition increases.

The ferric phosphate composition according to the invention forms in the course of the following chemical processes.

Water, powdery iron oxide Fe₂O₃ and aluminium oxide powder Al₂O₃, as well as nanopowders of silver, copper and flint are added to orthophosphoric acid while mixing constantly, maintaining the temperature in the reaction zone within a range of 60 to 70 °C. The synthesis of ferric phosphate takes place until the dissolution of the metal oxides into a colloidal state, i.e. in the course of the reaction a homogenous liquid with no apparent deposit forms.

The saturation of the liquid with iron, aluminium and other oxides takes place at an exothermic reaction, thereby the technological process requires no introduction of power or thermal energy from outer sources, which reduces the cost price of the composition.

The proportions of the components in mass fractions arc as follows:

| | |
|---|---|
| Orthophosphoric acid H₃PO₄ (85%) | 100 |
| Iron oxide Fe₂O₃ | 10-20 |
| Aluminium oxide Al₂O₃ | 5-10 |
| At least once nanopowder from among Ag, Cu, Si | 0.5 |
| Water | 100 |

Preferably the reaction takes place in a temperature range of 60-70 °C and it is controlled by the amounts of the aluminium oxide and nanopowders added.

The reaction product is iron(III) dihydrogen phosphate dihydrate Fe(H₂PO₄)₃ x 2H₂O in the form of liquid.

One of the distinguishable characteristics of this invention is increasing the amount of aluminium oxide to 10 parts of the overall mass. This constituent is known to act as a catalyst, modifying the speed of chemical and physical processes towards the direction given. The main function of the aluminium oxide in the invention based process is to facilitate the formation of intermediate compounds between the phosphate and iron with higher reactivity in the course of the synthesis, which allows reducing activation energy and facilitates the formation of the compounds with the given structure. In this case it increases the speed of the synthesis reaction and the reparation time of the composition reduces from 4 hours to 2 hours. The increased amount of the aluminium oxide in the composition reduces such an important indicator as the acidity of the finished mixture, with pH value changing from 0.2 to 1. In addition several properties of the timber improve as a result of the aluminium oxide. Research by the Estonian Central Laboratory of Microbiology and other labs has shown that adding aluminium oxide to a composition increases its antiseptic, disinfecting and fungicide properties and increases the fire resistance of materials covered with the compound and protection from biodegradation.

Another distinguishable characteristic of the invention is adding nanopowdery components, such as Ag, Cu and flint, as a result of which the bactericide properties of the composition and the strength of the layer applied increase.

When preparing the composition, preferably 85% orthophosphoric acid is used, which is industrially treated and used extensively, it can be purchased and used functionally in production.

Another characteristic of the invention is that the iron(III) dihydrogen phosphate dihydrate acts as a modifier by entering into a chemical reaction with the cellulose. At the modification the iron(III) dihydrogen phosphate dihydrate fixes to the timber surface and forms a protecting surface cover.

According to the invention, the composition can be used as a fire protective agent of timber and other materials containing cellulose.

According to the invention, the composition can he used for the bio-protection of timber against decay and rotting.

According to the invention, the composition can be used as a disinfecting antibacterial agent.

According to the invention, the composition can be used as a rust converter and a protecting agent against the corrosion of metals.

### Example of practical performance

100 mass fractions of 85% orthophosphoric acid is poured into a reactor, then 100 mass fractions of water, 10-20 mass fractions of commented iron(III) oxide, 5-10 mass fractions of powdery aluminium oxide and nanopowders of silver, copper and flint comminuted to particles 50 to 100 nm in the amount of 0.5 mass fractions are added in the presence of constant mixing. An exothermic reaction takes place, in the course of which the neutralisation of excess acidity and the dissolution of the metal oxides takes place. The heat released at the exothermic reaction is sufficient to dissolve the iron oxide and aluminium powder. The reaction temperature is controlled by the amount of the aluminium oxide added and it is maintained within a range of 60 to 70 °C.

As a result of the synthesis, a colloidal solution of the orthophosphates is obtained from the nano-iron, -aluminium and silver, copper, silicon metals, which comprise a composition of iron aluminium phosphate Fe(H₂PO₄)₃ and Al(H₂PO₄)₃ with the particle sizes of the metals from 50 to 100 nm.

The following chemical reaction takes place:

6H₃PO₄ + Fe₂O₃ + H₂O → catalyst → 2Fe(H₂PO₄)₃ x 2H₂O.

At the reaction of the iron with the orthophosphoric acid a wide array of salts forms, including also iron(III) dihydrogen phosphate - Fe(H₂PO₄)₃. These salts can be regarded as oxide mixtures with a generic formula of Fe(H₂PO₄)₃ x 2H₂O.

The composition obtained is in the form of a light brown, translucent, viscous liquid, which is handy to be used as a cover layer of materials.

The iron (III) dihydrogen phosphate present in the composition is a modifier of bio- and humidity protection for timber materials, which acts by entering into a chemical reaction with the cellulose. At the modification the iron (III) dihydrogen phosphate fixes on the timber surface.

The ferric phosphate based composition can be used as an impregnating agent to increase the fire resistance of timber and other materials containing cellulose, for the bio-protection of timber against decay and rotting, as a disinfecting antibacterial agent, as well as as a rust converter for the rust-inhibiting of metals.

The iron(III) dihydrogen phosphate dihydrate is not carcinogenic, it has no accumulating effect and it causes no local irritation.

In the 07.04.2003 report of the University of Tartu "Properties of Fe(H₂PO₄)₃" (see the annex) information on iron(III) dihydrogen phosphate is given.

Iron(III) forms a wide array of salts with phosphoric acid, including also Fe(H₂PO₄)₃. These salts can be regarded as oxide mixtures with a generic formula Fe₂O₃ x xP₂O₅ x yH₂O, where x and y are various integers. The constitution Fe₂O₃ x 3P₂O₅ x 6H₂O corresponds to the substance in the case of such a marking. It has also been proposed that the substance is actually ferric phosphoric acid with the constitution H₆(Fe(PO₄)₃. Of similar compounds also Fe(H₂PO₄)₃ x H₂O(Fc₂O₃ x 3P₂O₅ x 10H₂O) and FcH₃(PO₄)₂ x 2,5H₂O(Fe₂O₃ x 2P₂O₅ x 8H₂O) have been described. In addition to salts with a specific constitution, which can transfer into one another, owing to the conditions, a number of varied intermediate compounds exist. All in all, in the form of the system Fe₂O₃ x xP₂O₅ x yH₂O one deals with a very complex system, obtaining individual salts from which is not easy (the liquid phases arc viscous, the solid sediments present in them arc hygroscopic).

The abovementioned data explain, why there is so little discussion about the substance Fe(H₂PO₄)₃ and why a chemical seller does not the substance. The substance is soluble in water, the aqueous solution of the substance being brownish.

Fe(H₂PO₄)₃ decomposes in the solution as a result of hydrolysis. Primarily the following processes take place:

Fe³⁺H₂O ⇄ Fe(OH)^{2'} + H⁺ (1)

Fe(OH)²⁺ + H₂O ⇄ Fe(OH)₂ + H⁺ (2)

H₂PO₄ ⁻ ⇄ HPO₄²⁻ + H⁺ (3)

Owing to the processes taking place, the solution has a very complex constitution. Obviously, there is a very small number of Fe³⁺ ions in the solution, most of the iron being in the form of Fe(OH)²⁺ and Fe(OH)₂⁺, also obviously as various phosphate complexes. It is also possible that the hydrolysis amounts to iron(III) hydroxide and a suspension of iron(III) hydroxide or complexation and association processes take place in the solution.

The product constitutes a viscous, fluid solution (soluble iron 48-60 g/l, soluble aluminium 24-30 g/l, soluble silver of nanopowders 2-3 g/l, orthophosphoric acid 320-380 g/l), the rheology of which is mostly determined by its water content. It is a light brown colour, has a density of 1.47g/cm³, its viscosity being 34.3 on the basis of 133-4. The composition obtained dissolves well in water, which allows using it extensively at the treatment of timber with a paint roller, brush, airbrush, as well as under pressure on industrial scales. At the drying of the binding agents protective coatings are formed, which are virtually ablation resistant, condense on the surface of the products as moisture, while the mechanical properties of the treated materials preserve for a long period of time.

Examinations of the ferric phosphate based composition according to the invention showed that it has a wide area of application in the timber industry and building, veterinary medicine, agriculture and forest management, as well as at the production of building materials. The composition has an anticorrosive effect on metals, it works as a bio-protection agent and can be used as a preservative in the case of timber. An increase in the fire resistance of timber owing to the composition observed allows us to claim that it can be used as a antipyretic of timber. The composition according to the invention is ecologically harmless, while with its help it is possible to protect the natural resources of a country (trees, metals, soil, water) against decay and pollution.

The ferric phosphate based product on sale is manufactured in a crystalline form and is used also as a food additive. (Brian Steinwand Biopesticides and Pollution Prevention Division (7511C), Office of Pesticide Programs Environmental Protection Agency, 1200 Pennsylvania Avenue, NW, Washington, D.C., 20460. Phone: 703-305-7973 (or 308-8712). Fax: 703-308-7026. E-mail: steinwand.brian@epa.gov. The EPA Biopesticides Web site is: http://www.cpa.gov/pesticides/biopesticides. Review report for the active substance ferric phosphate finalised in the Standing Commitee on Plant Health at its meeting on 29 June 2001 in view of the inclusion of ferric phosphate in Annex I of Directive 91/414/EEC.)

The major difference of the ferric phosphate based composition dealt with herein from similar goods manufactured in the world is that the composition is in the form of liquid, whereas the Chinese and American manufacturers sell ferric phosphate without additives and in a crystalline state. The composition according to the invention is in a colloidal state and its constitution involves a wide array of metals of substantial importance; each one of them has its material importance, while they complement one another. The liquid obtained is handy to preserve and transport, easy to use (dissolving with water is enough). It maintains its properties for up to 5 years, is not hazardous or carcinogenic, it is being used widely. The technical properties arc certified with production quality certificates of OÜ Holz Prof. Its manufacturing does not generate hazardous waste or waste gases, is ecologically harmless to both people and animals, whereby the manufacturing of crystalline phosphates in China and the USA are accompanied by major problems related to hazardous waste and waste gases.

The manufacturing process of iron(III) dihydrogen phosphate dihydrate takes less time owing to the acceleration of the chemical reaction, the cost price of the produce is lower owing to a decrease in thermal and electric energy related expenses, no large areas or special training for the employees are required for the production.

At the treatment of timber with the phosphates based composition its modification takes place, i.e. covalent bonds are formed between the components of the timber and the protective composition.

The main components of timber arc cellulose, lignin and hemicelluloses (HMT), whereby their content varies on a relatively wide scale, depending on the type, age and habitat of the tree. Thus the cellulose content varies 40-60%, HMT - 13-25% in the case of coniferous trees and 25-35% in the case of deciduous trees. The lignin content varies to a smaller extent: 18-25% in the case of deciduous trees and 26-35% in the case of coniferous trees. Additionally, the constitution of HMT and lignin is different in the case of deciduous and coniferous trees, as well as in the case of different layers of the tissues, cells and even cell membrane of the timber within one species.

The ferric phosphate based composition does not obstruct the breathing cycle of timber, does not block or conserve its pores, rather than block the enzymes and hinders the activity of microorganisms located on the timber or growing on it (spores of fungi decomposing timber.). The composition creates a strong bond with timber, decreasing its porosity.

At modification the chemical fixing of the components of the composition on the surface of timber takes place according to the following scheme:

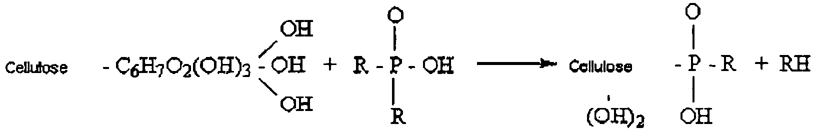

According to Freidenberg's formula the following functional groups are present in natural lignin: mctoxyl, phenolic hydroxyl, primary and secondary aliphatic hydroxyl groups, ketone and aldehyde groups. Hydroxyl groups are characteristic functional groups of lignin and determine much its reactivity in delignification, condensation, oxidation processes and at the chemical modification of various derivatives. In natural lignin preparations the total hydroxyl group content forms one hydroxyl lignin per a structural unit of phcnyl propane on an average. The complexity of the quantitative evaluation of the aliphatic and aromatic hydroxyl group content in lignin is due to the fact that their reactivity varies on a fairly large scale owing to the effect of other functional groups and the spatial position of phenyl propane chaisis. Lignin and non-cellulose carbohydrates form a common network in the matrix with the aid of valence bonds. Thereby the constitution of each component plays a significant role. In lignin, which is located immediately in timber, also phenol and parlially secondary aliphatic OII groups enter into a phosphorylation reaction in the first place. It was established in the process of the examination of the reticular constitution of the matrix that, as a result of the treatment of timber, an increase in the compactness of the network takes place, i.e. an increase in the number of cross-links, this phenomenon being representative of decreasing the expansion of timber material, changing its mechanical properties accordingly. One can draw the conclusion from the experimental data that with an increase in the operating reagent, also the phosphorus content in the lignin exuded increases, this indicating a combined effect of hydroxyl groups with ferric phosphate. The conclusion given is ascertained by spectral analysis. Stemming from the data and results obtained by us, it is sate to presume that the phosphorylation reaction of lignin takes place at the participation of hydroxyl groups, whereby respective ethers are formed. Whereas a lignin macromolecule contains hydroxyl groups of different natures (aliphatic and phenol), the lignin reaction centre blocking method was applied to examine the direction of the mutual effect of ferric phosphate with the hydroxyl groups of lignin. The TK spectrum of lignin displays well an increase in the intensity of the absorption bands in the zone of the valence fluctuation of hydroxyl groups of 3,000-3,600 cm⁻¹ and the lack of absorption bands of 1,660 and 1,715 cm⁻¹, which is responsible for fluctuations in carbonyl groups. It is concluded from these data that all types of hydroxyl groups of lignin participate in the phosphorylation reaction. In the lack of aliphatic hydroxyl groups in lignin, the smallest amount of phosphorus enter into it, which denotes the progression of the phosphorylation reaction mainly at the participation of the aliphatic hydroxyl groups of lignin. As is evident from the amount of phosphates and hydroxyl groups reacted of lignin obtained from the phosphorus content data, the use of acids with a pII below 1 is not recommended, as a result of the emergence of side reactions of the dissociation of ether bonds of the pinorcsinol and phcnyl coumaran structures of lignin, which are not stable in an acidic environment. As a result of this, it can he said that iron(III) dihydrogen phosphate dihydrate can enter into the walls of timber cells, fix there and simultaneously ensure the formation of a modified crystalline network, condensing it and filing in the gaps between the spaces. As a result of this, the cell walls alter their state and the ferric phosphate is fixed there for a long period of time. Orthophosphate compounds suit well for the modification of timber, whereas they are capable of forming compounds with hydroxyl groups of cellulose and simultaneously associate functional groups in the timber. The source materials for modification can also be ammophos or carbamide as well as other non-organic compounds containing nitrogen or ammonia, which in turn contain the good compound put forward herein in the phosphate composition. By introducing phosphate compounds into timber, the deformation resistance, longevity, fire resistance and solidity of the timber, the ablation resistance of the phosphate composition of the timber increases, water absorption decreases, light resistance, light stability form, the resistance of the timber treated with this material to mould, colouring and timber decaying fungi and other micro-organisms damaging materials containing cellulose forms.

All this is ascertained by dihydrogen phosphate dihydrate tests in the labs of the Tallinn University of Technology, certificates of studies conducted in the Estonian Microbiology Laboratories of the University of Tartu and a hygroscopicity test conducted in Sweden at the SP Technical Research Institute of Sweden (NT Build 504, N-P603649).

Yet namely the use of iron-rich phosphonates also increases the temperature and corrosion resistance of timber and it does the same also in the case of metal respectively, which places the treatment method offered among the most leading and undoubtedly the most competitive. The claims presented in relation to both the materials, as well as the toxicology of the prototypes and analogues, arc clearly irrefutable and convincing.

One can also suggest the use of the said phosphate composition in other directions, such as the creation of sanitary-epidemiological agents of the new generation for use: in rooms for the disinfection of surfaces, items of furniture, sanitary equipment, medical products, laundry, maintenance agents of patients in the case of bacterial, viral, fungal infections; in agricultural rooms (cowsheds, poultry farms, pigsties, greenhouses, etc.); for the disinfection of water and other liquids:
- when carrying through overall cleaning in medical-prophylactic and penitentiary institutions, at the facilities of the public utilities board, in public catering companies, sports complexes and other institutions of mass visiting;
- the modification of traditional materials for the purposes of rendering them efficient biocidal properties (bandage materials and polymeric products with medical and sanitary-hygienic use; fabrics and textile products; varnishes and paints, other building and timber-chipboard material; paper and cardboard; various types of packaging materials and containers; polymeric materials and plastics; the filters of water supply and air conditioning systems; ceramics and glass; other materials and coating agents) Another characteristic of the invention is that the iron(III) dihydrogen phosphate dihydrate acts as a modifier by entering into a chemical reaction with the cellulose. At the modification the iron(III) dihydrogen phosphate dihydrate fixes to the timber surface and forms a protecting surface cover.
- medicine (cancer treatment; infections of nasal, auricular, laryngeal organs; inflammatory infections of the mouth cavity; bronchial-pulmonary diseases; diseases of the gastric-intestinal tract; prophylactics and fighting infection processes, which involve antiseptic lavage, application, water disinfection, food preservation, air filtering, antimicrobial protection of garments, footwear, household items; infectious damage of bones, bone marrow, muscles, joints, lymph nodes. All degrees of bum, purulent non-healing wounds, erysipelas inflammations, fistulas; bacterial, viral or fungal inflammatory processes - conjunctivitis, blepharitis, keratitis, inflammation of the middle car, pharyngitis, laryngitis, tracheitis, tonsillitis, rhinitis, sinusitises, ORV1, vaginitis, erosion of the cervix, polyposis, myoma, fibroma, cystic formations, dermatitises, dermatoses, eczemas, furunculosis, acne, pimples, fungal damage, stomatitis, gingivitis, pcriodontosis, pcriodontitis, pulpitis, basaliomas, skin cancer, rash with acne and abscesses, the restoration of the acid-base balance of the skin, etc.);
- the cosmetics, perfumery industry (the manufacturing of shampoos, creams, toothpastes, washing powders, varnishes, paints, fabrics, hygiene instruments, etc., with new consumption properties).

Special attention must be paid to the novelty of the theoretical approach. No earlier observations were encountered in literature regarding the described method as nucleophilic phosphorylation.

## Claims

1. An ferric phosphate based composition obtained at mixing 100 mass fractions of orthophosphoric acid, iron(III) oxide, aluminium and water, **distinguished by the fact** that as an aluminium source, powdery aluminium oxide in the amount of 5-10 mass fractions is used, the amount of the iron oxide docs not exceed 20 mass fractions, preferably being within a range of 10-20 mass fractions, and the amount of the water constitutes 100 mass fractions, whereas at least one nanopowder from among silver, copper or flint is added to the mixture in the amount of 0.5 mass fractions.

2. The composition pursuant to claim 1, **distinguished by the fact** that the reaction takes place within a temperature range of 60-70 °C and it is controlled by the amounts of the aluminium oxide and nanopowders added.

3. The composition pursuant to claim 1, **distinguished by the fact** that 85% orthophosphoric acid is used.

4. The composition pursuant to claim 1, **distinguished by the fact** that the sizes of the particles of the nanopowders are 50-100 nanometre.

5. The composition pursuant to claim 1, **distinguished by the fact** that the main component is iron(III) dihydrogen phosphate dehydrate, and the side component is aluminium(III) dihydrogen phosphate dehydrate.

6. The use of the composition according to claim 1 as a fire protective agent of timber and other materials containing cellulose.

7. The use of the composition according to claim 1 for the bio-protection of timber against decay and rolling.

8. The use of the composition according to claim 1 as a disinfecting antibacterial agent.

9. The use of the composition according to claim 1 as a rust converter and a protecting agent against the corrosion of metals.

10. The use of the composition according to claim 1 as a modifier by entering into a chemical reaction with the cellulose.

## Patentansprüche

1. Eisenphosphatbasierte Zusammensetzung, die durch Mischung von 100 Massenanteilen von Orthophosphorsäure, Eisen(III)oxid, Aluminium und Wasser entsteht, **dadurch gekennzeichnet, dass** als Aluminiumquelle Aluminiumoxidpulver in einer Menge von 5-10 Massenanteilen verwendet wird, die Menge des Eisenoxids nicht 20 Massenanteile überschreitet und vorzugsweise zwischen 10-20 Massenanteilen bleibt, und die Wassermenge 100 Massenanteile beträgt, wobei wenigstens ein Nanopulver unter Silber, Kupfer oder Flint der Mischung in einer Menge von 0,5 Massenanteilen hinzugefügt wird.

2. Zusammensetzung nach Anspruch 1, **dadurch gekennzeichnet, dass** die Reaktion in einem Temperaturbereich von 60-70 °C stattfindet und durch die Menge von hinzugefügtem Aluminiumoxid und Nanopulvern bestimmt wird.

3. Zusammensetzung nach Anspruch 1, **dadurch gekennzeichnet, dass** 85%ige Orthophosphorsäure verwendet wird.

4. Zusammensetzung nach Anspruch 1, **dadurch gekennzeichnet, dass** die Größen der Partikel der Nanopulvern 50-100 Nanometer betragen.

5. Zusammensetzung nach Anspruch 1, **dadurch gekennzeichnet, dass** die Hauptkomponente Eisen(III)dihydrogenphosphatdehydrat und die Nebenkomponente Aluminium(III)dihydrogenphosphatdehydrat ist.

6. Verwendung der Zusammensetzung gemäß Anspruch 1 als Feuerschutzstoff für Holz und sonstige cellulosehaltigen Materialien.

7. Verwendung der Zusammensetzung gemäß Anspruch 1 für Bioschutz von Holz gegen Fäulnis und Verrottung.

8. Verwendung der Zusammensetzung gemäß Anspruch 1 als antibakterielles Desinfektionsmittel.

9. Verwendung der Zusammensetzung gemäß Anspruch 1 als Rostumwandler und Schutzmittel gegen Metallkorrosion.

10. Verwendung der Zusammensetzung gemäß Anspruch 1 als Modifikator durch eine chemische Reaktion mit Cellulose.

## Revendications

1. Une composition à base de phosphate ferrique obtenue en mélangeant 100 parts de masse d'acide phosphorique, d'oxyde de fer (III), d'aluminium et d'eau, **se distinguant par le fait** qu'en tant que source d'aluminium, l'oxyde d'aluminium poudreux dans un montant de 5-10 parts de masse est utilisé, le montant d'oxyde de fer n'excède pas 20 parts de masse, de préférence entre 10 et 20 parts de masse, et le montant d'eau est de 100 parts de masse, tandis qu'au moins des nanoparticules d'argent, de cuivre ou de silex sont ajoutées au mélange avec un montant de 0,5 parts de masse.

2. La composition, conformément à la revendication 1, **se distinguant par le fait** que la réaction a lieu dans une plage de température entre 60 et 70 °C, est contrôlée par les montants d'oxyde d'aluminium et de nanoparticules ajoutées.

3. La composition, conformément à la revendication 1, **se distingue par le fait** que 85% d'acide phosphorique est employé.

4. La composition, conformément à la revendication 1, **se distingue par le fait** que la taille des nanoparticules est de 50 à 100 nanomètres.

5. La composition, conformément à la revendication 1, **se distingue par le fait** que le composant principal est le de phosphate de fer (III) déshydraté, et le composant secondaire est le phosphate d'aluminium (III) déshydraté.

6. L'utilisation de la composition, conformément à la revendication 1, comme agent de protection contre l'incendie du bois de construction et d'autres matériaux contenant de la cellulose.

7. L'utilisation de la composition, conformément à la revendication 1, pour la protection écologique du bois de construction contre la dégénération et la putréfaction.

8. L'utilisation de la composition, conformément à la revendication 1, comme agent désinfectant et antiseptique.

9. L'utilisation de la composition, conformément à la revendication 1, comme transformateur de rouille et comme agent de protection contre la corrosion des métaux.

10. L'utilisation de la composition, conformément à la revendication 1, comme modificateur en entrant dans en réaction chimique avec la cellulose.
